# EUROPÄISCHE PATENTSCHRIFT

(11) **EP 0 359 268 B1**
(45) Veröffentlichungstag und Bekanntmachung des Hinweises auf die Patenterteilung: **04.08.1993**
(21) Anmeldenummer: 89117049.0
(22) Anmeldetag: 14.09.1989
(51) Int. Cl.: G01M 9/04

(54) **Windkanal mit Schalldämpfer**
Wind tunnel with sound absorber
Tunnel de soufflerie avec une sourdine

(30) Priorität: 16.09.1988 DE 3831458
(43) Veröffentlichungstag der Anmeldung: 21.03.1990
(73) Patentinhaber: Bayerische Motoren Werke Aktiengesellschaft, 80788 München (DE)
(72) Erfinder: Janssen, Lutz, D-8000 München 71 (DE); Dömeland, Peter, D-8310 Gilching (DE); Kramer, Carl, Prof.Dr., D-5100 Aachen (DE); Mechel, F.P., Prof.Dr., D-7031 Grafenau (DE); Heller, Hanno, Dr., D-3300 Braunschweig (DE)

(56) Entgegenhaltungen:
- SU-A- 180 020
- J. AIRCRAFT, Band 14, Nr. 11, November 1977, Seiten 1109-1115; D. DIETRICH et al.: "Fan acoustic signatures in an anechoic wind tunnel"

## Beschreibung

Die Erfindung betrifft einen Windkanal nach dem Oberbegriff des Patentanspruchs 1.

Bei einem bekannten Windkanal dieser Art ist der Windkanalabschnitt zwischen der Meßstrecke und dem stromab von dieser angeordneten Axialgebläse als Diffusor ausgebildet (EP-A-136 987). Die bei diesem bekannten Windkanal von dem Axialgebläse ausgehenden Geräusche können weitgehend ungehindert gegen die Luftströmung in die Meßstrecke gelangen.

Bei einem anderen bekannten Windkanal mit geschlossener Luftführung und einem der Erzeugung der Luftströmung dienenden Axialgebläse in dem annähernd parallel zu dem Meßstreckenarm des Windkanals angeordneten Luftrückführungsarm ist sowohl stromauf als auch stromab von der Meßstrecke, die sowohl geschlossen als auch als Freistrahlmeßstrecke ausgebildet sein kann, in den beiden den Meßstreckenarm und den Luftrückführungsarm miteinander verbindenden Querführungsarmen jeweils ein Kulissenschalldämpfer mit Umlenkungen und außerdem sowohl stromauf als auch stromab von der Meßstrecke zwischen dieser und den Querführungsarmen in dem Meßstreckenarm jeweils ein weiterer Schalldämpfer angeordnet (AGARD Report No. 601, 1973, "Problems in Wind Tunnel Testing Techniques", 8-27, Fig. 4). In diesem bekannten Windkanal können in der Meßstrecke nicht nur aerodynamische, sondern auch akustische Messungen durchgeführt werden, die von den Geräuschen weitgehend unbeeinflußt sind, die von dem Axialgebläse erzeugt werden. Ein ähnlicher Windkanal ist aus J. Aircraft 14 November 1977 Seiten 1109 - 1116 bekannt.

Der Erfindung liegt in erster Linie die Aufgabe zugrunde, einen Windkanal der eingangs genannten Art zu schaffen, bei dem trotz der geradlinigen Anordnung von Meßstrecke und Axialgebläse die Möglichkeit besteht, in der Meßstrecke akustische Messungen weitgehend unbehindert durch die von dem Axialgebläse ausgehenden Geräusche durchzuführen.

Die Lösung dieser Aufgabe ist in dem kennzeichnenden Teil des Patentanspruchs 1 angegeben. Durch sie wird erreicht, daß die von dem Axialgebläse ausgehenden Schallwellen die Meßstrecke nur gedämpft erreichen. Das Ausmaß der Dämpfung kann durch die Ausbildung des Schalldämpfers beeinflußt werden, der je nach den Gegebenheiten des Windkanals und den durchzuführenden Messungen ausgelegt werden kann. Nach der Erfindung kann ein Windkanal für akustische Messungen einen kompakten Aufbau erhalten.

Der Schalldämpfer kann zu dem Axialgebläse benachbart angeordnet sein. Dadurch wird erreicht, daß er sich in der Nähe der Schallquelle befindet und damit eine unerwünschte Ausbreitung ungedämpften Schalls weitgehend unterbunden wird.

Der Schalldämpfer kann sich zudem zumindest annähernd über die gesamte Länge des Windkanalabschnitts zwischen der Meßstrecke und dem Axialgebläse erstrecken, so daß der gesamte Bereich, der zwischen der Meßstrecke und dem Axialgebläse zur Verfügung steht, für die Schalldämpfung ausgenutzt werden kann.

Eine besonders zweckmäßige Ausgestaltung ergibt sich, wenn der Schalldämpfer derart ausgebildet ist, daß er eine geradlinige Verbindung der Meßstrecke und des Axialgebläses unterbindet. Dadurch wird erreicht, daß sich von dem Axialgebläse ausgehende Schallwellen nicht geradlinig in die Meßstrecke hinein ausbreiten können. Dies gewährleistet, daß der gesamte Schall, der von dem Axialgebläse ausgeht, in allen seinen Bestandteilen bei seiner Ausbreitung in Richtung auf die Meßstrecke zu gedämpft wird.

Eine für die Durchströmung des Schalldämpfers günstige Gestaltung wird erreicht, wenn der Schalldämpfer zu der Verlängerung der Drehachse des Axialgebläses zumindest annähernd symmetrisch ausgebildet ist.

In weiterer vorteilhafter Ausgestaltung der Erfindung ist vorgesehen, daß der Schalldämpfer einen Außenkörper, der in dem von ihm eingenommenen Windkanalabschnitt die Windkanalaußenwand bildet, und wenigstens einen Innenkörper aufweist, dessen Außenseite mit Abstand von der Innenseite des Außenkörpers angeordnet ist und dessen beide Endbereiche in Achsrichtung zu den Schalldämpferenden hin sich jeweils verjüngend ausgebildet sind. Diese Ausbildung des Schalldämpfers vereint eine gute Durchströmbarkeit mit einer guten Schalldämpfung. Sie ermöglicht eine besonders wirksame Schalldämpfung bei geringer Baulänge.

Das dem Axialgebläse zugewandte Ende des Innenkörpers kann in seinen Abmessungen quer zur Achsrichtung an die Ausmaße der Nabe des Axialgebläses angepaßt sein. Das der Meßstrecke zugewandte Ende des Innenkörpers kann ebenfalls stumpf oder in für eine gute Strömungsführung vorteilhafter Weise spitz auslaufend ausgebildet sein. Die Größe des Querschnitts des zwischen Außenkörper und Innenkörper vorhandenen Kanals kann über die Länge des Schalldämpfers hinweg konstant sein oder unterschiedliche Werte annehmen, beispielsweise über die gesamte oder einen Teil der Länge des Schalldämpfers, vorzugsweise in dem Ausströmbereich, als Diffusor ausgebildet sein.

Der Innenkörper kann prismatisch ausgebildet sein, so daß Seitenteile des Innenkörpers an den Außenkörper anschließen, oder in für die Durchströmung besonders günstiger Weise und für eine effektive Schalldämpfung rundum mit Abstand von dem Außenkörper angeordnet sein.

Ein Schalldämpfer mit Außenkörper und Innenkörper, die beide rotationssymmetrisch ausgebildet sind und von denen der Innenkörper kegelstumpfförmige Endbereiche aufweist, die sich zu den beiden Enden hin verjüngend ausgebildet sind, ist aus der FR-PS 1 283 147 bekannt. Der bekannte Schalldämpfer ist in der Nähe eines Axialgebläses stromab von diesem in einer Rohrleitung angeordnet. Der größte Außendurchmesser des Innenkörpers in dessen mittlerem Bereich kann größer als der Innendurchmesser des Außenkörpers an dessen Einström- bzw. Ausströmende sein, so daß eine geradlinige Ausbreitung der von dem Axialgebläse ausgehenden Schallwellen durch den Schalldämpfer hindurch nicht möglich ist.

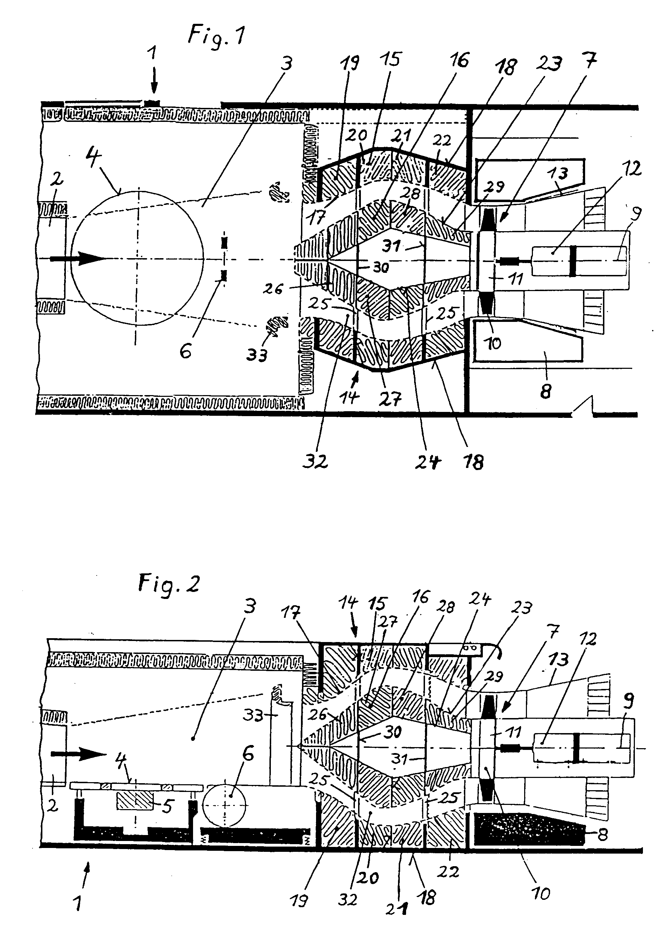

In der Zeichnung ist ein Ausführungsbeispiel der Erfindung schematisch dargestellt, und zwar zeigt
- Fig. 1: einen Horizontalschnitt durch einen Teil eines Windkanals,
- Fig. 2: den lotrechten Längsmittelschnitt durch den Teil des Windkanals nach Fig. 1,
- Fig. 3 bis 5: je eine Möglichkeit des Einsatzes des Windkanals nach Fig. 1 und 2.

Ein Windkanal 1 einer Größe, die für Messungen an Personenkraftwagen geeignet ist, weist im Anschluß an eine Düse 2 eine als Freistrahlmeßstrecke ausgebildete Meßstrecke 3 auf, deren Seitenwände und Decke mit einer reflexionsarmen Keilauskleidung versehen sind. In der Meßstrecke 3 ist in dem Meßstreckenboden niveaugleich mit diesem eine Drehscheibe 4 mit Windkanalwaage 5 angeordnet. Stromabwärts von der Drehscheibe 4 befindet sich eine Rolle 6 eines Rollenprüfstands, die derart angeordnet ist, daß ihr oberer Bereich ebenfalls auf der Höhe des Meßstreckenbodens liegt.

Stromab von der Meßstrecke 3 ist in einem Abstand von dieser, der zumindest annähernd der Länge der Meßstrecke 3 gleich ist, ein Axialgebläse 7 angeordnet, das auf einem Gebläse-Schwingfundament 8 ruht und der Erzeugung der Luftströmung in dem Windkanal 1 dient. Die Meßstrecke 3 und das Axialgebläse 7 sind achsgleich zueinander angeordnet. Die Drehachse 9 des Axialgebläses 7 verläuft in der Längsmittelebene der Meßstrecke 3 mit Abstand von dem Meßstreckenboden parallel zu diesem. Der Durchmesser des Gebläserades 10 ist etwa halb so groß wie die Länge der Meßstrecke 3. Die Nabe 11 des Gebläserades 10 ist mit einem Elektromotor 12 antriebsmäßig verbunden, der als Gleichstrommotor ausgebildet und stromab von dem Gebläserad 10 achsgleich mit diesem angeordnet ist. Das Gebläserad 10 ist von einer Rohrleitung 13 umschlossen, die stromab von dem Gebläserad 10 als Diffusor ausgebildet ist.

Zwischen der Meßstrecke 3 und dem Axialgebläse 7 ist ein Schalldämpfer 14 angeordnet, der sich annähernd über die gesamte Länge des Windkanalabschnitts zwischen der Meßstrecke 3 und dem Axialgebläse 7 erstreckt. Dieser Windkanalabschnitt kann wie bei dem Ausführungsbeispiel etwa so lang wie die Meßstrecke 3 sein, aber auch eine andere Länge aufweisen. Beispielsweise kann der Windkanalabschnitt zwischen der Meßstrecke 3 und dem Axialgebläse 7 kürzer als die Meßstrecke 3 ausgebildet sein und eine Länge von etwa 3/4 der Meßstreckenlänge aufweisen.

Der Schalldämpfer 14 weist einen Außenkörper 15 und einen Innenkörper 16 auf. Der Außenkörper 15 bildet in dem von ihm eingenommenen Windkanalabschnitt die Luftführungsaußenwand. Die der Meßstrecke 3 zugewandte Einströmöffnung des Außenkörpers 15 weist eine annähernd rechteckige Form mit größerer Breite als Höhe auf. Mit seiner Ausströmöffnung schließt der Außenkörper 15 an die Einströmöffnung des Gehäuses des Axialgebläses 7 an. Demgemäß ist die Ausströmöffnung des Außenkörpers 15 kreisrund ausgebildet. Die Breite der Einströmöffnung ist annähernd so groß wie der Durchmesser der Ausströmöffnung, die Höhe der Einströmöffnung ist nur etwa 3/4 so groß.

Der von dem Außenkörper 15 umschlossene Raum erweitert sich in Strömungsrichtung von der Einströmöffnung aus bis etwa zur halben Länge des Außenkörpers 15 und verengt sich sodann wieder zu der Ausströmöffnung hin. Die dementsprechend bauchig verlaufende Innenseite 17 des Außenkörpers 15 wird von einem Lochblech gebildet. Die Außenseite des Außenkörpers 15 wird von schallhart ausgebildeten Außenwänden 18 gebildet. Der Raum zwischen dem Lochblech und den Außenwänden 18 ist in vier in Achsrichtung aneinander anschließende Kammern 19, 20, 21, 22 unterteilt, in denen Schallschluckstoff angeordnet ist. Als Schallschluckstoff können Mineralfaserplatten eingesetzt werden. Die Trennwände zwischen den Kammern 19 bis 22 sind schallhart ausgebildet.

Der Innenkörper 16 ist achsgleich zu dem Außenkörper 15 angeordnet und weist eine etwa spindelförmige Gestalt auf. An dem der Meßstrecke 3 zugewandten Ende ist der Innenkörper 16 annähernd keilförmig spitz mit waagerecht verlaufender Schneide ausgebildet. Von diesem Ende aus, das um einen geringen Betrag über das meßstreckenseitige Ende des Außenkörpers 15 hinausragt, erweitert sich der Innenkörper 16 in Strömungsrichtung sowohl in seiner Breite als auch in Höhenrichtung bis etwa zur Mitte seiner Länge. Die dem Axialgebläse 7 zugewandte Hälfte des Innenkörpers 16 verjüngt sich auf das Axialgebläse 7 zu. In der Nähe des Gebläserades 10 weist der Innenkörper 16 eine kreisrunde Gestalt mit einem Außendurchmesser, der dem der Nabe 11 des Gebläserades 10 gleich ist, auf. Der Innenkörper 16 schließt bis auf einen geringen Spaltabstand an die Nabe 11 an. Die etwa auf der halben Länge des Innenkörpers 16 vorhandene größte Erstreckung des Innenkörpers 16 quer zu der Verlängerung der Drehachse 9 des Axialgebläses 7 ist größer als der Außendurchmesser der Ausströmöffnung des Außenkörpers 15.

Die Außenseite 23 des Innenkörpers 16 wird von einem Lochblech gebildet. Im Inneren weist der Innenkörper 16 mittig einen Tragkörper 24 auf, der sich im wesentlichen in Strömungsrichtung erstreckt und mit etwa radial angeordneten strömungsgünstig geformten Stützen 25 an dem Außenkörper 15 befestigt ist. Der Raum zwischen dem Lochblech des Innenkörpers 16 und dem Tragkörper 24 ist in vier in Strömungsrichtung hintereinander angeordnete Kammern 26, 27, 28, 29 unterteilt, in denen Schallschluckstoff angeordnet ist. Auch bei dem Innenkörper 16 können Mineralfaserplatten als Schallschluckstoff eingesetzt werden. Die Trennwände zwischen den Kammern 26 bis 29 und die Wände des Tragkörpers 24 sind schallhart ausgebildet. Innerhalb des Tragkörpers 24 sind Schottwände 30, 31 quer zur Achsrichtung angeordnet.

Zwischen dem Außenkörper 15 und dem Innenkörper 16 ist rundum ein ringförmiger Strömungskanal 32 vorhanden, der sich von der Einströmöffnung des Schalldämpfers 14 zu dessen Ausströmöffnung erstreckt. Die Größe des ringförmigen Querschnitts des Strömungskanals 32 ist über einen Teil der Länge des Schalldämpfers 14 gleichbleibend. In diesem Bereich verringert sich mit zunehmendem Kanalringdurchmesser die radiale Kanalhöhe entsprechend. Zum Strömungsauslaß des Schalldämpfers 14 hin ist der Strömungskanal 32 diffusorartig gestaltet. In diesem Bereich vergrößert sich in Strömungsrichtung die radiale Kanalhöhe stärker als dies durch die Verringerung des Kanalringdurchmessers bedingt ist.

An dem der Meßstrecke 3 zugewandten Ende des Schalldämpfers 14 ist diesem ein Vorleitring 33, dessen Gestalt der Einströmöffnung des Außenkörpers 15 angepaßt ist, mit Abstand von dem Schalldämpfer 14 vorgelagert.

Während des Betriebs des Windkanals 1 wird durch das Axialgebläse 7 eine Luftströmung erzeugt, welche die Düse 2 in Richtung des eingezeichneten Strömungspfeiles verläßt, die Meßstrecke 3 passiert und in den Schalldämpfer 14 ein- und durch diesen hindurchtritt. Die bei diesem Betrieb von dem Axialgebläse 7 erzeugten Geräusche werden stromauf in Richtung auf die Meßstrecke 3 zu durch den Schalldämpfer 14 gedämpft. Wegen der bauchigen Gestaltung des Schalldämpfers ist eine geradlinige Schallausbreitung durch den Schalldämpfer 14 hindurch nicht möglich. Dadurch wird trotz der großen räumlichen Nähe des Axialgebläses 7 zu der Meßstrecke 3 in dieser nur ein derart abgeschwächter Geräuschpegel wirksam, daß auch bei hohen Strahlgeschwindigkeiten in der Meßstrecke 3 akustische Messungen ohne nennenswerte Störung durch das Gebläsegeräusch durchgeführt werden können. Der Schalldämpfer 14 bewirkt bei hohem strömungsmechanischem und akustischem Wirkungsgrad eine breitbandige Durchgangsdämpfung in einem großen Frequenzbereich, z. B. in dem Bereich von 25 Hz bis 10 kHZ. Es können derartige Dämpfungswerte erreicht werden, daß das reduzierte Gebläsegeräusch beispielsweise zwischen 5 und 10 dB unter dem aerodynamischen Geräuschpegel der Freistrahlvermischungszone in der Meßstrecke 3 liegt. Ein durch Strömungsrauschen im Eintrittsbereich des Schalldämpfers 14 hervorgerufenes Schalldämpfereigengeräusch ist nicht zu verzeichnen.

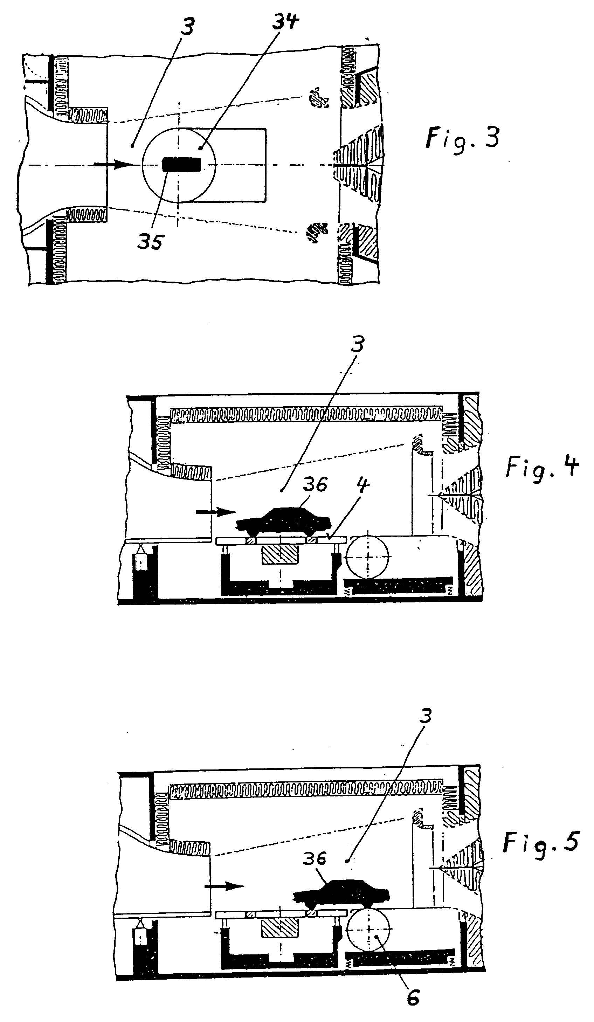

Nach Fig. 3 ist vorgesehen, daß in der Meßstrecke 3 eine Bodenplatte 34 angeordnet ist, auf welcher ein zu untersuchendes Modell 35, das einen Personenkraftwagen im Maßstab 1:2,5 darstellen kann, mit Abstand von dem Meßstreckenboden gehalten ist. Nach Fig. 4 ist ein Personenkraftwagen 36 auf der Drehscheibe 4 angeordnet. Nach Fig. 5 ist der Personenkraftwagen 36 für Messungen mit belastetem Motor auf dem Rollenprüfstand angeordnet.

Der Windkanal nach der Erfindung weist eine hohe schalltechnische und strömungstechnische Eignung auf. Dies gilt auch bei durch die Prüflinge hervorgerufener hoher Meßstreckenblockierung, die zu Störungen in der Strömung führt.

In Abweichung von dem dargestellten Ausführungsbeispiel kann bei größerer zur Verfügung stehender Windkanallänge ein Abstand zwischen dem Axialgebläse und dem Schalldämpfer vorgesehen sein. Auch zwischen der Meßstrecke und dem Schalldämpfer kann ein Abstand vorgesehen sein.

Anders als bei dem dargestellten Ausführungsbeispiel mit dem als Ringkanal ausgebildeten Schalldämpfer-Strömungskanal kann ein Innenkörper vorgesehen sein, der beispielsweise mit seitlichen Teilen an den Außenkörper anschließt, so daß lediglich an der Oberseite und an der Unterseite des Innenkörpers jeweils ein Strömungskanal vorhanden ist, der zur Verhinderung einer geradlinigen Schallausbreitung durch den Schalldämpfer hindurch ähnlich wie bei dem dargestellten Ausführungsbeispiel gewunden ausgebildet sein kann. Ferner kann statt eines Schalldämpfers mit einem Außenkörper und einem Innenkörper ein Schalldämpfer anderer Bauart, beispielsweise ein Kulissenschalldämpfer, zwischen der Meßstrecke und dem Axialgebläse angeordnet sein.

Der Meßstreckenarm, der die Düse, die Meßstrecke, den Schalldämpfer und das Axialgebläse aufweist, kann Teil eines Windkanals mit geschlossener Luftführung sein. Der Luftrückführungsarm eines derartigen Windkanals kann in der bei derartigen Windkanälen üblichen Weise seitlich neben dem Meßstreckenarm angeordnet sein. Er kann jedoch auch oberhalb des Meßstreckenarms angeordnet sein. Diese Ausführung beansprucht eine kleinere Grundfläche.

Statt einer geschlossenen Luftführung kann eine offene Luftführung vorhanden sein. Bei einer derartigen Luftführung kann die Rückführung der Luft in einer Windkanalhalle erfolgen, in welcher der Meßstreckenarm angeordnet ist. In der Windkanalhalle kann die Luft oberhalb des Meßstreckenarms zurückgeführt werden. Eine derartige Ausbildung ist bezüglich der beanspruchten Grundfläche besonders vorteilhaft und ermöglicht eine außerordentlich kompakte Windkanalgestaltung.

Zur Dämpfung der Geräusche, die von dem Axialgebläse erzeugt werden, kann stromab von dem Axialgebläse ein Rückführungs-Schalldämpfer vorgesehen sein. Dieser ist bei geschlossener Luftführung zweckmäßig in dem Luftrückführungsarm und bei offener Luftrückführung in einer Windkanalhalle in dem Raum zwischen dem Meßstreckenarm und der Windkanalhallenwandung vorgesehen. Bei Rückführung der Luft in einer Windkanalhalle oberhalb des Meßstreckenarms kann der Rückführungs-Schalldämpfer oberhalb des Schalldämpfers vorgesehen sein, der zwischen der Meßstrecke und dem Axialgebläse angeordnet ist.

Statt stromab kann das Axialgebläse stromauf von der Meßstrecke angeordnet sein.

## Patentansprüche

1. Windkanal, bei dem ein der Erzeugung der Luftströmung dienendes Axialgebläse (7) achsgleich zu einer Meßstrecke (3) mit Abstand von dieser angeordnet ist,
**dadurch gekennzeichnet**,
daß zwischen der Meßstrecke (3) und dem Axialgebläse (7) ein Schalldämpfer (14) angeordnet ist.

2. Windkanal nach Anspruch 1, dadurch gekennzeichnet, daß der Schalldämpfer (14) zu dem Axialgebläse (7) benachbart angeordnet ist.

3. Windkanal nach Anspruch 2, dadurch gekennzeichnet, daß der Schalldämpfer (14) sich zumindest annähernd über die gesamte Länge des Windkanalabschnitts zwischen der Meßstrecke (3) und dem Axialgebläse (7) erstreckt.

4. Windkanal nach Anspruch 1, 2 oder 3, dadurch gekennzeichnet, daß der Schalldämpfer (14) derart ausgebildet ist, daß er einer geradlinigen Verbindung der Meßstrecke (3) und des Axialgebläses (7) im Wege steht.

5. Windkanal nach Anspruch 4, dadurch gekennzeichnet, daß der Schalldämpfer (14) zu der Verlängerung der Drehachse (9) des Axialgebläses (7) zumindest annähernd symmetrisch ausgebildet ist.

6. Windkanal nach Anspruch 5, dadurch gekennzeichnet, daß der Schalldämpfer (14) einen Außenkörper (15), der in dem von ihm eingenommenen Windkanalabschnitt die Luftführungsaußenwand bildet, und wenigstens einen Innenkörper (16) aufweist, dessen Außenseite (23) mit Abstand von der Innenseite (17) des Außenkörpers (15) angeordnet ist und dessen beide Endbereiche in Achsrichtung zu den Schalldämpferenden hin sich jeweils verjüngend ausgebildet sind.

7. Windkanal nach Anspruch 6, dadurch gekennzeichnet, daß der Abstand der Außenseite (23) des Innenkörpers (16) von der Verlängerung der Drehachse (9) des Axialgebläses (7) an dem dem Axialgebläse (7) zugewandten Ende zumindest annähernd so groß wie der Halbmesser der Nabe (11) des Gebläserades (10) des Axialgebläses (7) ist.

8. Windkanal nach Anspruch 6 oder 7, dadurch gekennzeichnet, daß der Innenkörper (16) an dem der Meßstrecke (3) zugewandten Ende zumindest annähernd spitz auslaufend ausgebildet ist.

9. Windkanal nach Anspruch 8, dadurch gekennzeichnet, daß die Spitze des Innenkörpers (16) zumindest annähernd keilförmig ausgebildet ist.

10. Windkanal nach Anspruch 9, dadurch gekennzeichnet, daß die Schneide des Keils zumindest annähernd waagerecht ausgerichtet ist.

11. Windkanal nach einem der Ansprüche 6 bis 10, dadurch gekennzeichnet, daß die Größe des Querschnitts des Strömungskanals (32) zwischen Außenkörper (15) und Innenkörper (16) über zumindest einen Teil der Kanallänge wenigstens annähernd konstant ist.

12. Windkanal nach einem der Ansprüche 6 bis 10, dadurch gekennzeichnet, daß die Größe des Querschnitts des Strömungskanals (32) zwischen Außenkörper (15) und Innenkörper (16) über zumindest einen Teil der Kanallänge in Strömungsrichtung zunimmt.

13. Windkanal nach Anspruch 12, dadurch gekennzeichnet, daß der Strömungskanal (32) zwischen Außenkörper (15) und Innenkörper (16) über zumindest einen Teil der Kanallänge als Diffusor ausgebildet ist.

14. Windkanal nach einem der Ansprüche 6 bis 13, dadurch gekennzeichnet, daß der Innenkörper (16) rundum mit Abstand von dem Außenkörper (15) angeordnet ist.

15. Windkanal nach Anspruch 14, dadurch gekennzeichnet, daß die der Meßstrecke (3) zugewandte Öffnung des Außenkörpers (15) zumindest annähernd rechteckförmig ausgebildet ist.

16. Windkanal nach Anspruch 14 oder 15, dadurch gekennzeichnet, daß die dem Axialgebläse (7) zugewandte Öffnung des Außenkörpers (15) zumindest annähernd kreisrund ausgebildet ist.

17. Windkanal nach Anspruch 16, dadurch gekennzeichnet, daß der Durchmesser der zumindest annähernd kreisrunden Öffnung wenigstens annähernd dem Durchmesser des Gehäuses des Axialgebläses (7) gleich ist.

18. Windkanal nach einem der Ansprüche 1 bis 17, dadurch gekennzeichnet, daß das Axialgebläse (7) stromab von der Meßstrecke (3) angeordnet ist.

19. Windkanal nach einem der Ansprüche 1 bis 18, gekennzeichnet durch eine geschlossene Luftführung.

20. Windkanal nach einem der Ansprüche 1 bis 19, dadurch gekennzeichnet, daß die Meßstrecke (3) als Freistrahlmeßstrecke ausgebildet ist.

21. Windkanal nach Anspruch 20, dadurch gekennzeichnet, daß die Seitenwände und die Decke der Meßstrecke (3) mit einer reflexionsarmen Keilauskleidung versehen sind.

22. Windkanal nach einem der Ansprüche 1 bis 21, dadurch gekennzeichnet, daS der Abstand des Axialgebläses (7) von der Meßstrecke (3) zumindest annähernd der Länge der Meßstrecke (3) gleich ist.

23. Windkanal nach einem der Ansprüche 1 bis 21, dadurch gekennzeichnet, daß der Abstand des Axialgebläses (7) von der Meßstrecke (3) etwa drei Viertel der Länge der Meßstrecke (3) gleich ist.

24. Windkanal nach einem der Ansprüche 1 bis 23, dadurch gekennzeichnet, daß der Durchmesser des Gebläserades (10) des Axialgebläses (7) etwa halb so groß wie die Länge der Meßstrecke (3) ist.

25. Windkanal nach einem der Ansprüche 1 bis 24, dadurch gekennzeichnet, daß der Windkanal (1) eine derartige Größe aufweist, daß er für Messungen an in der Meßstrecke (3) befindlichen Personenkraftwagen (36) geeignet ist.

## Claims

1. A wind tunnel in which an axial-flow fan (7) which serves to generate a stream of air is arranged with its axis aligned to that of a test section (3) at a distance from the test section (3), characterised in that a sound absorber (14) is arranged between the test section (3) and the axial-flow fan (7).

2. A wind tunnel according to Claim 1, characterised in that the sound absorber (14) is arranged next to the axial-flow fan (7).

3. A wind tunnel according to Claim 2, characterised in that the sound absorber (14) extends at least approximately the entire length of the wind tunnel section between the test section (3) and the axial-flow fan (7).

4. A wind tunnel according to any one of Claims 1-3, characterised in that the sound absorber (14) is constructed such that it prevents a linear connection of the test section (3) and the axial-flow fan (7).

5. A wind tunnel according to Claim 4, characterised in that the sound absorber (14) is at least approximately symmetrical to the extension of the axis of rotation (9) of the axial-flow fan (7).

6. A wind tunnel according to Claim 5, characterised in that the sound absorber (14) has an outer body (15), which forms the air guiding outer wall in that section of the wind tunnel taken up by it, and that it has at least one inner body (16), the outer side (23) of which is arranged at a distance from the inner side (17) of the outer body (15) and the two end regions of which taper towards the sound absorber ends in the direction of the axis.

7. A wind tunnel according to Claim 6, characterised in that the distance between the outer side (23) of the inner body (16) and the extension of the axis of rotation (9) of the axial-flow fan (7) at that end facing the axial-flow fan (7) at least approximates to the radius of the hub (11) of the fan wheel (10) of the axial-flow fan (7).

8. A wind tunnel according to either Claim 6 or 7, characterised in that the inner body (16) at that end facing the test section (3) is at least approximately tapered to a point.

9. A wind tunnel according to Claim 8, characterised in that the tip of the inner body (16) is at least approximately wedge-shaped.

10. A wind tunnel according to Claim 9, characterised in that the edge of the wedge is at least approximately horizontal.

11. A wind tunnel according to any one of Claims 6 to 10, characterised in that the size of the cross section of the flow channel (32) between the outer body (15) and the inner body (16) is at least nearly constant over at least a part of the channel length.

12. A wind tunnel according to any one of Claims 6 to 10, characterised in that the size of the cross section of the flow channel (32) between the outer body (15) and the inner body (16) increases over at least a part of the channel length in the direction of flow.

13. A wind tunnel according to Claim 12, characterised in that the flow channel (32) between the outer body (15) and the inner body (16) is in the form of a diffuser over at least a part of the channel length.

14. A wind tunnel according to any one of Claims 6 to 13, characterised in that the inner body (16) is arranged at a distance from the outer body (15) over its entire circumference.

15. A wind tunnel according to Claim 14, characterised in that the aperture of the outer body (15) facing the test section (3) is at least approximately rectangular in shape.

16. A wind tunnel according to either Claim 14 or 15, characterised in that the aperture of the outer body (15) facing the axial-flow fan (7) is at least approximately circular in shape.

17. A wind tunnel according to Claim 16, characterised in that the diameter of the, at least approximately circular, aperture at least approximates to the diameter of the housing of the axial-flow fan (7).

18. A wind tunnel according to any one of claims 1 to 17, characterised in that the axial-flow fan (7) is arranged downstream from the test section (3).

19. A wind tunnel according to any one of Claims 1 to 18, characterised in that it has closed air guidance.

20. A wind tunnel according to one of Claims 1 to 19, characterised in that the test section (3) is a free jet test section.

21. A wind tunnel according to Claim 20, characterised in that the side walls and ceiling of the test section (3) are provided with a low reflection, wedge-shaped, lining.

22. A wind tunnel according to one of Claims 1 to 21, characterised in that the distance between the axial-flow fan (7) and the test section (3) at least approximates to the length of the test section (3).

23. A wind tunnel according to one of Claims 1 to 21, characterised in that the distance between the axial-flow fan (7) and the test section (3) is equal to approximately three quarters of the length of the test section (3).

24. A wind tunnel according to one of Claims 1 to 23, characterised in that the diameter of the fan wheel (10) of the axial-flow fan (7) is equal to approximately half the length of the test section (3).

25. A wind tunnel according to one of Claims 1 to 24, characterised in that the wind tunnel (1) is of such a size that it is suited to measurements with a passenger vehicle (36) in position on the test section (3).

## Revendications

1. Tunnel de soufflerie dans lequel une soufflante axiale (7) servant à produire le courant d'air est disposée coaxialement par rapport à une veine d'essai (3) à une certaine distance de celle-ci, tunnel de soufflerie caractérisé en ce qu'entre la veine d'essai (3) et la soufflante axiale (7) est disposé un amortisseur de bruit (14).

2. Tunnel de soufflerie selon la revendication 1, caractérisé en ce que l'amortisseur de bruit (14) est disposé au voisinage de la soufflerie axiale (7).

3. Tunnel de soufflerie selon la revendication 2, caractérisé en ce que l'amortisseur de bruit (14) s'étend au moins approximativement sur toute la longueur du tronçon du tunnel de soufflerie entre la veine d'essai (3) et la soufflante axiale (7).

4. Tunnel de soufflerie selon la revendication 1, la revendication 2 ou la revendication 3, caractérisé en ce que l'amortisseur de bruit (14) est réalisé de façon qu'il fasse obstacle à une liaison en droite ligne de la veine d'essai (3) et de la soufflante axiale (7).

5. Tunnel de soufflerie selon la revendication 4, caractérisé en ce que l'amortisseur de bruit (14) est réalisé de façon à être au moins approximativement symétrique par rapport au prolongement de l'axe de rotation (9) de la soufflante axiale (7).

6. Tunnel de soufflerie selon la revendication 5, caractérisé en ce que l'amortisseur de bruit (14) comporte un corps externe (15) et qu'il forme la paroi externe de conduite d'air dans le tronçon du tunnel de soufflerie occupé par lui, et au moins un corps interne (16) dont la face externe (23) est disposée à une certaine distance de la face interne (17) du corps externe (15), et en ce que les deux zones terminales de ces corps vont en se rétrécissant respectivement en direction axiale vers les extrémités de l'amortisseur de bruit.

7. Tunnel de soufflerie selon la revendication 6, caractérisé en ce que la distance de la face externe (23) du corps interne (16) et le prolongement de l'axe de rotation (9) de la soufflante axiale (7), à l'extrémité en regard de la soufflante axiale (7), est au moins approximativement aussi grande que le demi diamètre du moyeu (11) de la roue (10) de la soufflante axiale (7).

8. Tunnel de soufflerie selon la revendication 6 ou la revendication 7, caractérisé en ce que le corps interne (16) à son extrémité en regard de la veine d'essai (3) est réalisé de façon à se terminer au moins approximativement en pointe.

9. Tunnel de soufflerie selon la revendication 8, caractérisé en ce que la pointe du corps interne (16) revêt au moins approximativement une forme de coin.

10. Tunnel de soufflerie selon la revendication 9, caractérisé en ce que l'arête vive du coin est orientée au moins approximativement à l'horizontale.

11. Tunnel de soufflerie selon une des revendications 6 à 10, caractérisé en ce que la grandeur de la section transversale du canal d'écoulement (32) entre le corps externe (15) et le corps interne (16) est constante au moins approximativement sur au moins une partie de la longueur du canal.

12. Tunnel de soufflerie selon une des revendications 6 à 10, caractérisé en ce que la grandeur de la section transversale du canal d'écoulement (32) entre le corps externe (15) et le corps interne (16) croît dans le sens de l'écoulement sur au moins une partie de la longueur du canal.

13. Tunnel de soufflerie selon la revendication 12, caractérisé en ce que le canal d'écoulement (32) entre le corps externe (15) et le corps interne (16) revêt la forme d'un diffuseur sur au moins une partie de la longueur du canal.

14. Tunnel de soufflerie selon une des revendications 6 à 13, caractérisé en ce que le corps interne (16) est disposé sur toute sa périphérie à une certaine distance du corps externe (15).

15. Tunnel de soufflerie selon la revendication 14, caractérisé en ce que l'ouverture du corps externe (15) placée en regard de la veine d'essai (3) est au moins approximativement de forme rectangulaire.

16. Tunnel de soufflerie selon la revendication 14 ou la revendication 15, caractérisé en ce que l'ouverture du corps externe (15) qui est placée en regard de la soufflante axiale (7) revêt au moins approximativement une forme circulaire.

17. Tunnel de soufflerie selon la revendication 16, caractérisé en ce que le diamètre de l'ouverture au moins approximativement circulaire, est au moins approximativement égal au diamètre du carter de la soufflante axiale (7).

18. Tunnel de soufflerie selon une des revendications 1 à 17, caractérisé en ce que la soufflante axiale (7) est disposée en aval de la veine d'essai (3).

19. Tunnel de soufflerie selon une des revendications 1 à 18, caractérisé par une conduite d'air fermée.

20. Tunnel de soufflerie selon une des revendications 1 à 19, caractérisé en ce que la veine d'essai (3) est réaliséo sous la forme d'une veine d'essai à jet libre.

21. Tunnel de soufflerie selon la revendication 20, caractérisé en ce que les parois latérales et le plafond de la veine d'essai (3) sont munis d'un revêtement en coins peu réfléchissant.

22. Tunnel de soufflerie selon une des revendications 1 à 21, caractérisé en ce que la distance entré la soufflante axiale (7) et la veine d'essai (3) est, tout au moins approximativement, égale à la longueur de la veine d'essai (3).

23. Tunnel de soufflerie selon une des revendications 1 à 21, caractérisé on ce que la distance entre la soufflante axiale (7) et la veine d'essai (3) est à peu près égale aux trois quarts de la longueur de la veine d'essai (3).

24. Tunnel de soufflerie selon une des revendications 1 à 23, caractérisé en ce que le diamètre de la roue (10) de la soufflante axiale (7) est à peu près moitié aussi grand que la longueur de la veine d'essai (3).

25. Tunnel de soufflerie selon une des revendications 1 à 24, caractérisé en ce que ce canal (1) a une grandeur telle qu'il est adapté à des essais effectués sur des voitures automobiles particulières (36) se trouvant dans la veine d'essais (3).
